Europäisches Patentamt

**European Patent Office**

**Office européen des brevets**

(19)

(11) Publication number: **0 023 757**
A1

# EUROPEAN PATENT APPLICATION

(21) Application number: 80302035.3

(22) Date of filing: 17.06.80

(51) Int. Cl.³: **F 24 D 5/04,** F 28 D 21/00,
 **F 24 B 7/00**

(30) Priority: 21.06.79 GB 7921577
 06.07.79 GB 7923581
 29.04.80 GB 8014038
 10.05.80 GB 8015541

(43) Date of publication of application: **11.02.81**
 **Bulletin 81/6**

(84) Designated Contracting States: **BE DE FR GB NL**

(71) Applicant: **Tibbs, Christopher Evan Mundell, Chadmore
Dene Gipsy Lane, Wokingham Berkshire RG11 2HP (GB)**

(72) Inventor: **Tibbs, Christopher Evan Mundell, Chadmore
Dene Gipsy Lane, Wokingham Berkshire RG11 2HP (GB)**

(54) **Ventilation heat exchanger.**

(57) Equipment for warming the incoming fr4sh air ventilating a building in which the ventilation air is drawn from the solar heated space under the buildings roof, which space is in turn replenished with fresh air from outside the building, and passed through a heat exchanger (8) in the boiler flue (9) and ducted to ventilate the house.

EP 0 023 757 A1

0023757

## VENTILATION HEAT EXCHANGER

The invention relates to ventilation heat exchanger equipment which when mounted in the flue of a central heating combustion unit provides a flow of warmed fresh air which is ducted to ventilate a building

The increasing cost of energy is rapidly leading to buildings being better insulated against heat loss. Up to 40% and more of the heat released in houses with such improved insulation is lost due to the existing random means of ventilation. The invention greatly reduces this loss, recovers a significant amount of solar heat from the roof space of houses and by using a heat exchanger in the flue of a central heating combustion unit recovers much of the heat vented with its products of combustion. In these ways the invention substantially reduces the amount of fuel used in heating a building.

During daylight hours the roof of a house or other building is warmed above the surrounding air temperature by the sun. In southern England, on still air days with full sun the loft area under a dark coloured tiled roof can be as much as 15°C above the outside air temperature. Even on overcast days in mid-winter the air under the apex of such a roof is still some 3°C above the outside air temperature.

Many attempts have been made to make some use of this low grade solar heat for warming a building. It has been proposed to board across under the rafters to form a series of upward sloping

2                    0023757

ducts immediately under the tiles.    The warmed air rises
upward and is collected at the roof apex and recirculated into the
house to warm it.    During the heating season this arrangement
only provides useable heat during those erratic periods when
the sun shines and the outside temperature is not unduly cold.
This is because in winter when the heat is required, although
the loft is warmer than the surrounding outside air, it is almost
always lower than the inside temperature required within the
house.    For this reason the only way commercially available
in the U.K. today of using this low grade solar heat for space
heating is to use a heat pump.    An electrically driven unit of
this type is produced by Eastwood Heating Developments Ltd., of
Mansfield, Nottinghamshire.    It collects the loft heat with an
evaporator mounted well up into the apex of the roof space and
delivers it at a higher temperature into a hot water radiator
system.    The capital cost of such a heat pump system is however
some 2 to 3 times that of an equivalent gas boiler system whilst
its operating fuel costs are also higher than those for an
equivalent gas fired installation.

                              ventilation
The second way in which the/heat exchanger equipment saves fuel
is to reduce the amount of warm air which has to be vented from
the house so as to avoid condensation within it.    Such
ventilation has to be substantial in volume as it is estimated
that each day a typical family of four will convert 14 litres
of water into water vapour within the house they occupy.
Without adequate ventilation this condenses on windows and
other cold surfaces where it spoils paint and rots woodwork.

Ventilation is normally provided by gaps and air vents in window and door frames and by air vents or extractor fans built into the walls of the house. The loss of heat in providing sufficient ventilation to avoid condensation by such random ventilation methods is some 40% or more of the total heat released within well insulated houses.

To reduce this loss a house has been constructed in Saskatchewan (The Observer page 21  27th May 1979) in which the heat from the warm air being vented is recovered by a heat exchanger. This heat exchanger warms the incoming air by taking heat from the air going out of the house. This heat exchanger comprises a plywood box with a thin plastic sheet to separate the incoming cold and the outgoing warm air.

There are two major disadvantages with this type of heat exchanger. Firstly, because the heat exchanger efficiency is unlikely to exceed 75% the fresh air blown into the building will still be colder than its inside temperature. The occupants will therefore complain of cold draughts. Secondly the very real risk is introduced that if the fan blowing fresh air into a well sealed house stops whilst the extraction fan continues to operate the combustion products from an open flue heating boiler could (if used) be drawn back into the house to suffocate its occupants.

Although the need for a practical means of reducing the heat lost due to ventilation is generally recognised no such system is available in the U.K. Furthermore none is expected to be commercially available for some time ahead.    This was made clear in the last paragraph of "Keeping up comfort whilst cutting costs" by Victor Thorn in "Home Improvements Journal" February/March 1979

The third way in which the invention saves fuel is by recovering much of the heat which is otherwise lost via the flue of a central heating combustion unit.

When operating at its full rated output a modern gas central heating boiler delivers about 75% of the heat released within it into the water being heated.    However such boilers only operate continuously during the very coldest spells which may only occur every 2 or 3 winters.    During the 7 months U.K. heating season its intermittent on/off operation reduces the average working efficiency of such boilers to less than 70%. At least 30% of the heat released within the boiler is **thus** lost  with the boilers combustion products  up the flue.

A paper 'Future trends in domestic heating by gas' (M.B.Green and J.Rich – Gas Marketing – Jan and Feb 1980) makes clear that experts in this field see little expectation that this percentage of heat lost up the flue will be significantly reduced in the foreseeable future.

There are two reasons for this conclusion.    Firstly the installation of any device which restricts the flow of gasses up the flue of a domestic gas boiler will affect its operation and can result in failure to clear the products of combustion.

The second reason is that the installation of any device which cools the gasses passing up the flue will cause condensation to occur within it. Such condensation will trickle down into the boiler which will corrode and rapidly reach the end of its useful life.

Practical and commercially viable solutions to the various problems indicated have not been found previously because each problem has been studied in isolation from the others. This invention solves all three problems simultaneously by providing ventilation heat exchanger equipment in the flue of the central heating combustion unit. Equipment is disclosed which does not restrict the flow of gasses up the flue of the combustion unit. This may be a gas boiler mounted within the house and may have either a balanced or an open flue up which its hot combustion products flow. If it is an open flue boiler these will pass out of the house in complete isolation from an air duct which is in good thermal contact with the flue and through which heating duct a fan propels fresh air into the house. This flow of warmed fresh air is ducted to points within the house as far from the boiler as is practical. The fresh air then flows without significant obstruction through as much of the house as is practical on its way back to the boiler air intake. By careful experiments and full scale trials the inventor has discovered that a well designed ventilation system in this form, over the 7 month U.K. heating season, only requires one third the volume of ventilation air needed for the random methods of ventilation normally used today. With random ventilation the comment is often made that when the wind blows it is difficult to keep the house warm. This is because random ventilation which provides acceptable ventilation on a still day may provide up to six or even ten times as much ventilation as is required on windy days.

It is because the optimum amount of air is provided for the ventilation of each room, regardless of whether it is windy or not, that the loss of heat due to ventilation is reduced by the invention to one third of normal. As this incoming air slightly pressurises the house a significant proportion flows through the house to be vented via the boiler flue.

According to the invention the fresh air is drawn from the loft roof space. By doing so a substantial amount of the temperature gain in the roof can be utilised. The inventor discovered that in southern England the temperature at the apex of the roof space under a 45° pitch roof covered with dark brown tiles under which there was tilers felt, was as follows:-

|  | °C warmer than outside | |
|---|---|---|
|  | June | December |
| Overcast day | 4°C | 2.5°C |
| Intermittent rain and sun | 6°C | 3.5°C |
| Hazy sun | 9°C | 5°C |
| Full sun | 16°C | 9°C |

All the above temperatures were obtained under light wind conditions. Higher temperatures were obtained with no wind and lower temperatures when the wind was strong. The temperature rise on the floor of the loft area was only about two thirds of that at the apex of the roof space. The temperature rise due to solar gain can be further increased by only drawing air from under the roof apex of south facing roof surfaces and partitioning off the loft areas under north facing roof surfaces. The temperature at the apex of the roof space will be a maximum in mid winter if the south facing surface has a pitch of 61° and the north facing surface has the smallest pitch which is practical. The warmed air drawn in by the heat exchanger fan is warmest if its intake is located centrally in the apex of the roof with the outside air intake vents under the eaves at each corner of the roof. It is of course essential that there should not be air leaks from inside the house into the loft.

In southern England the average temperature rise above that outside which is required within a house throughout the 7 month heating season is some 10°C to 15°C. It will be seen that by drawing fresh air for ventilation via the roof space that up to one third of this required temperature rise will, in daylight hours, be provided by the solar gain in the roof. After dark the roof space will be warmer than outside due to the heat losses from inside the house.

The inventor also discovered ways in which a very substantial proportion of the heat normally lost up the boiler flue can be recovered to further heat the incoming fresh air without reducing safety margins below those for a conventional boiler installation.

By placing the heat exchanger zone as high and as near to the flue terminal as possible the volume of hot gasses in the lower part of the flue are always much greater than the volume of cooled gasses at its top. Under these conditions the inventor discovered that providing the temperature at the top of the flue is not significantly below that of the air entering the boiler there is at all times a satisfactory up draught.

The risk that the introduction of the heat exchanger could dangerously reduce the flue draught due to incorrect installation or installation too low down in the flue can be eliminated by integrating the heat exchanger and the flue terminal into a single unit. By doing this only a very small length at the top of the flue is cold. In addition if the maximum amount of heat is being extracted from the flue, the ventilating fan can be controlled to only operate when the temperature at the top of the flue is not below that of the air entering the boiler from the house. This control may be obtained with a temperature sensor at the top of the flue which cuts off the fan below a pre-adjusted temperature.

This control however may best be obtained with two temperature sensors connected in a bridge circuit. One sensor is located at the top of the flue and the other in the air entering the boiler. The sensors can conveniently be two identical thermistor probes. When the upper thermistor is the hotter it has a lower resistance than the bottom thermistor and acting via a transistor amplifier acts to close a relay to switch on the ventilating fan. Immediately the upper probe ceases to be the hotter it ceases to have the lower resistance and the relay then opens to switch off the ventilating fan. This permits the flue to warm up somewhat before there is any risk that it could become sufficiently cold for its updraught to be dangerously reduced. If there is only a single sensor at the top of the flue it may either be a simple thermal switch or a thermistor which uses the same circuit with the exception that a fixed resistor is used in place of the bottom thermistor.

To ensure the maximum transfer of heat to the incoming fresh air all surfaces of the air heating duct in the heat exchange zone should be as high in temperature as possible. If the fresh air heating duct is around the outside of the flue maximum temperature can be achieved by arranging that heat from the flue wall is passed by thermal conduction to the outer wall of the air heating duct. Heat is thus transferred to the fresh air from all the walls of the heating duct instead of from the flue wall only.

Normally the hot flue gasses tend to pass rapidly up the centre of the flue and make relatively small contact with the flue wall. In order that maximum heat may be extracted in as short a length of flue as possible, the flue wall area should be increased as much as possible without reducing the flow of flue gasses over the flue surface. The inventor discovered that this may be done by fitting a closed core down the centre of the flue. This forces the flue gasses to flow in closer contact with the flue wall. In addition heat picked up from the flue gasses by the core can be thermally conducted to the flue wall and also to the outer wall of the fresh air heating duct.

The volume of fresh air blown into the house must be restricted to the minimum needed to provide satisfactory ventilation. By thus restricting the volume of fresh air its delivery temperature will at all times be above the temperature required in the house. The occupants will thus not complain of cold draughts.

The inventor discovered that under practical conditions the location of an open flue boiler in the kitchen could provide two or more changes of air per hour in that room and that sufficient air flows via the rest of the house back to the boiler and also out through the unavoidable air leaks to provide a complete change of air every two hours in the rest of the house. This was found to provide satisfactory ventilation under all normal conditions.

The most satisfactory way of achieving the return of air to the boiler in the kitchen is to provide a 35 mm clearance at the bottom of all internal doors. This draws off the cold layer of air which otherwise tends to remain stationary at floor level.

It is of course desirable to ensure that if intermittently used ventilation fans are fitted in a W.C., bath or laundry room that their total extraction capacity is less than the volume of fresh air blown into the house via the ventilation system.

The inventor also discovered that the volume of fresh air blown in via the ventilation system should be somewhat more than can pass out via the boiler flue so that the whole house is slightly pressurised when all doors and windows are shut. This gives a number of advantages. Firstly it assists the flow of gasses up the flue. Secondly the Gas Authority mandatory safety requirement that there shall be a vent directly to outside in the room in which the boiler is located can be met without the usual cold draughts this can cause. I found the best way to provide the mandatory safety vent was to run an under-floor duct from an outer wall to a point immediately below the boiler. As there is a slight positive pressure in the house cold air will not normally be drawn upwards into the house from this mandatory safety vent. As the warm air in the house is lighter than the cold air in the duct warm air will not normally pass downwards into the duct.

The third advantage of slightly pressurising the house is that with such a system there is no risk to the occupants of the house if the ventilation fan stops. As there is no extract fan the products of combustion cannot be drawn back into the house.

It will be understood from what has been said that in a multistorey house the heat exchanger in the flue should always be at the top of the flue. When an additional length of flue pipe has to be added this should always be done below the heat exchanger zone

An efficient air filter should be included at the clean air intake points to ensure that dirt is not carried via the ventilating system to spoil the decoration

As most of the moisture in the products of combustion will be condensed within the flue heat exchanger zone it is essential to provide a condensation trap below this zone and pipe the condensate to a drain.

It will be understood that with minor modifications the ventilation heat exchanger can be used in the flue of a gas fired heat pump, a hot air recirculation heater or in the flue of a solid or liquid fuel fired heating system. The system may also be used in larger buildings such as hotels and factories. The ventilation heat exchanger may also be used with combustion units having fans to propel the products of combustion up the flue. Under these conditions it is of course not necessary for the heat exchanger to be at the top of the flue and it could be integrated as part of the combustion unit.

In order that the importance of the invention be fully appreciated the following fuel saving figures give an indication of what it can achieve in a well insulated and well sealed house.   The figures are an average for the 7 month U.K. heating season.   They assume there would otherwise be a 6 kW space heating requirement with 2 kW additionally provided by the boiler for water heating.

| | |
|---|---|
| Saving of 2/3 of the 40% of the 6 kW total space heating requirement which would normally be lost due to random ventilation | 1.6 kW |
| Recovery of 75% of the heat which is otherwise lost up the boiler flue.   The boiler is assumed also to be delivering 2 kW for heating washing water in addition to providing the central heating | 1.1 kW |
| Recovery from roof space of daytime solar gain and heat leakage through ceiling after dark | 0.4 kW |
| Total | 3.1 kW |

The normal 6 kW requirement from the boiler for space heating is therefore reduced by 3.1 kW to 2.9 kW

As a gas boiler central heating system has a lower fuel cost, for equivalent heat output, than an electric heat pump it will be seen that a ventilation heat exchanger system according to

0023757

the invention will have less than half the fuel cost of an electrically driven heat pump system.

Work is also proceeding on gas fueled heat pumps. One such pump has a 10 kW output capacity with up to 1.5 units of energy delivered for every one put in by the gas fuel (The Engineer page 39 24th May 1979)

A building which otherwise requires 6 kW for space heating will, with a system according to the invention, only require 2.9 kW from the boiler. Producing this requires a gas consumption of around 4 kW. For the same 6 kW total heat requirement the gas fuelled heat pump also requires an input of around 4 kW. However, although the fuel requirement is similar the water temperature delivered by a gas heat pump is not adequate for washing so that supplementary heating is required. In addition the water temperature is so low that a larger and more costly radiator system is unavoidable.

In the future the ideal heating system might well be a combination of the present invention and a gas fired heat pump installation.

The literature referred to shows that a ventilation heat exchanger system according to the invention is the most cost effective way of heating a house available today.

Examples of the best forms of the invention under differing conditions are shown in the accompanying drawings in which:-

Figure 1     Shows a ventilation heat exchanger installation according to the invention

Figure 2     Shows a plan view of the bungalow in which the heat exchanger shown in figure 1 has been installed

Figure 3     Shows a preferred form of circuit using two thermistor probes to control the ventilating fan operation

Figure 4     A horizontal cross section through the centre of the flue heat exchanger showing how heat can be conducted from the flue wall to the outer wall of the air heating duct

Figure 5     Shows how the surface area of the flue can be increased to further raise the heat transfer efficiency

Figure 6     A cross section through the heat exchanger shown in Figure 5

Figure 7     Shows how the flue terminal can be combined with the heat exchanger, fans and air filter to form a single integrated unit

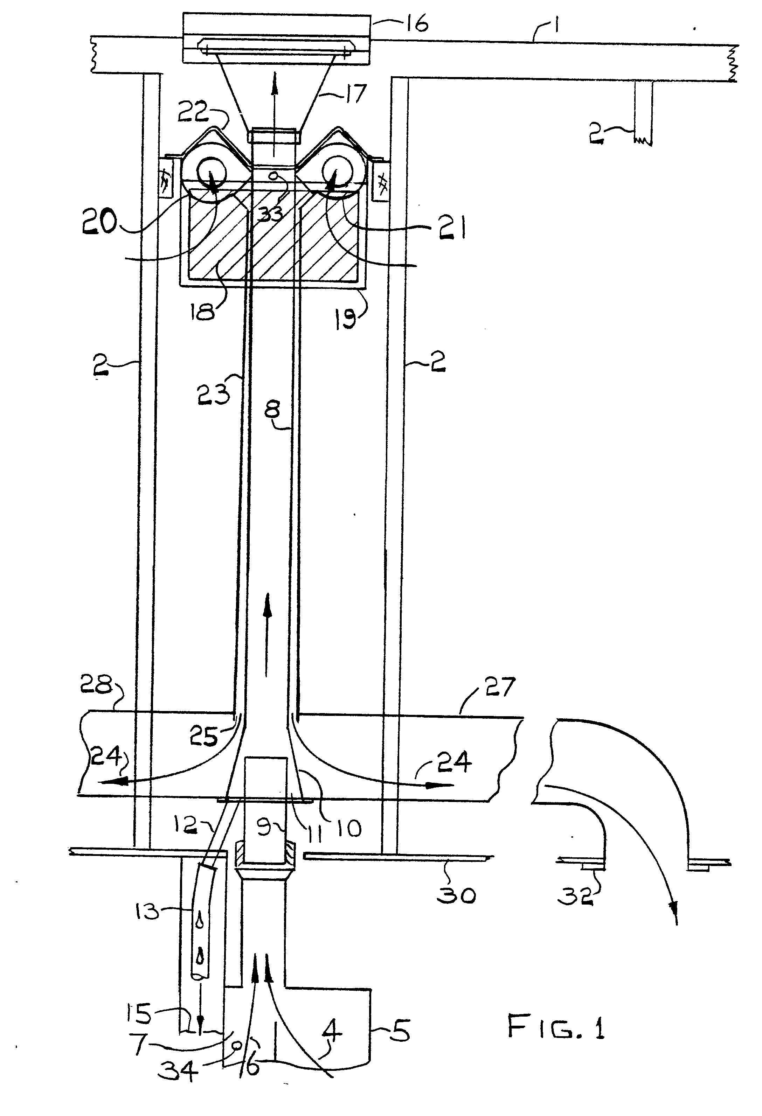

Figure 1 shows a section of a bungalow roof.   The line of the roof ridge is shown as 1 with roof trusses 2 spaced 600 mm apart.    The products of combustion 4 from the boiler 5 are brought together at the bottom of the flue with the air 6 being drawn from the house via the draught diverter 7 which forms a part of the boiler. The boiler in the installation has a rated output of 8.8 kW. As the flue has no deviation from vertical throughout its full length the strongest possible natural updraught is ensured. The heat exchanger flue pipe 8 and 9 is made of welded 102 mm diameter stainless steel tube with a 1.6 mm wall thickness. The use of stainless steel minimises the risk of corrosion, cracking or leaking at any time during the maximum life expectation of the installation. As the heat is extracted from the flue gasses moisture will condense on the flue walls. In the installation shown in figure 1 the maximum moisture condensation will be about 0.25 litres per hour.

The condensed moisture will trickle down the inside of the flue wall and be carried outward by the flared section 10 to collect in the annular condensation trap 11 from which a 25 mm drain pipe 12 carries it to the drains. The conical side of the trap 10, the upper part of the flue 8, the initial section of the drain pipe 12 and the bottom of the trap are all of stainless steel argon arc welded together with the bottom section of the flue 9. The lower section of the drain pipe 13 is of plastic tube so that it will not be attacked by corrosive condensate from the flue.

The example shows a wall mounted boiler 5 which is connected directly to the heat exchanger flue 9. The wall on which the boiler is mounted is shown as 15. If the boiler is floor mounted or the house is multi-floor there would be a length of normal flue pipe between the boiler 5 and the bottom of the stainless steel heat exchanger flue 9. Where such a length of lower flue pipe is necessary it is desirable that it also should not deviate from vertical. It is also desirable that it should be well insulated against heat loss and important that all flue joints are carefully sealed.

The top of the flue is terminated in a roof ridge vent tile 16 via an adaptor 17. This method of termination is much preferred as it makes possible the minimum length of cooled gasses above the heat exchanger zone in the flue. An increase in the volume of cold gasses at the top of the flue will make it necessary to instal a fan in the flue to avoid an excessive reduction in the volume of gasses passing up the flue. The heat exchanger zone should always be as high up the flue as is possible.

If the roof is flat the termination should be as low and as near to the roof surface as is practical. With flat roofs there is no danger of a down draught as wind blowing over flat roofs and roofs with a pitch up to 30° creates a vacuum above the roof which tends to draw gasses up the flue. The roof ridge vent method of termination is also much preferred on high pitch roofs as it permits the heat exchanger zone to be as high up and as near the flue termination as possible.

The fresh air from the roof space passes through an air filter 18 into the cover 19. Two small diameter fans 20 and 21 are used in place of one large fan as they make it possible to mount the heat exchanger higher up into the apex of the roof than would be possible with a single large fan. The shape of the fan mounting 22 permits the heat exchanger to be directly coupled to a normal adaptor 17. With steep roof pitches the shortest possible length of flue pipe is used to join the two together.

The fans 20 and 21 together consume 80 watts and blow 2.5 cubic metres of air per minute at 10 mm water gauge down the annular duct formed by the outer tapering cylinder 23 around the flue pipe 8. The flow of gasses up the flue is a maximum when as much of the heat is extracted from the flue as near its top as is possible. This can be achieved by tapering the outer cylinder 23 so that it is a minimum diameter at the top. 2.5 cubic metres of air per minute when ducted so that it is distributed to all principal rooms is sufficient to ventilate the average house. If intermittently used extraction fans are fitted for example in bathrooms their total combined capacity should in this example be restricted to less than 2.5 cubic metres per minute.

In passing down the duct formed by the outside of the flue 8 and the cylinder 23 the incoming fresh air is heated from the flue. To minimise heat loss it is desirable to insulate the outside of cylinder 23

The heated air 24 leaves the heating duct at 25 and the outside of the conical condensate trap 10 causes it to flow smoothly into the ventilation ducts 27 and 28 which carry it to the outlet.

32 through the ceiling 30 into the room below.

The thermistor temperature probes 33 and 34 respectively sense the temperature of the gasses at the top of the flue and the air entering the boiler via the draught diverter 7

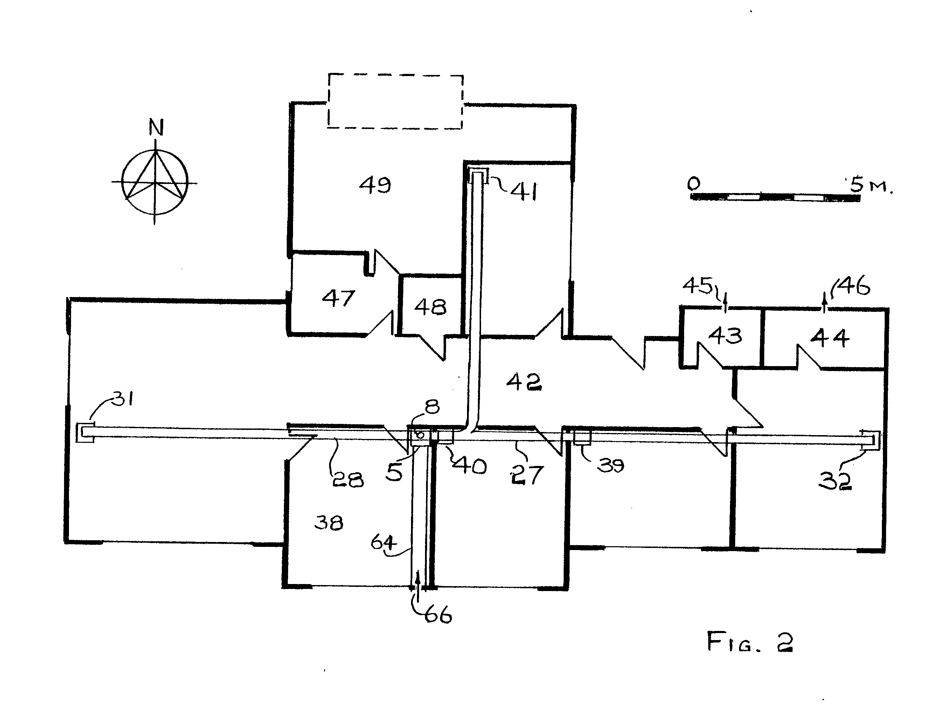

Figure 2 shows the plan of a bungalow in which the ventilation heat exchanger in Figure 1 is installed. All major windows face south to maximise solar gain. The ceilings are insulated with 180 mm of glass fibre in the roof. The suspended floor is insulated underneath with 120 mm of glass fibre and the timber frame brick clad walls are internally insulated with 100 mm of glass fibre. All windows are double glazed and there is a thermal break in all the aluminium window frames. As far as possible every air leak is sealed. There are no vents in window or door frames and all are double rebate sealed.

The boiler 5 is installed in the kitchen 38. In order to meet the Gas Authority mandatory ventilation requirements for open flue gas fired boilers a vent 66 is provided below floor level in the outside wall, with a 102 mm diameter under floor duct 64 connecting it to an opening in the floor immediately below the boiler 5.

The ventilation ducts 28 and 27 carry the warmed fresh air to outlet 31 in the living room and 32 in the master bedroom. Other air outlets 39, 40 and 41 respectively are in bedroom 2 the study and bedroom 3

All internal doors have 35 mm clearance between their bottom and the floor so that the ventilation airflow may pass easily into the hall 42 and thus to the kitchen 38 where it enters the boiler draught diverter 7 and passes out of the building via the flue.

The two bathrooms 43 and 44 each have intermittently used ventilation fans 45 and 46 each with a capacity of only 1 cubic metre of air per minute. These two fans together therefore have a smaller capacity than the 2.5 cubic metre capacity of the ventilation fans in the heat exchanger.

As the utility room 47 is only used for about 6 hours a week the window is opened for ventilation during this period. A recirculation carbon air filter hood is installed over the electric cooker in the kitchen. This hood returns the filtered air back into the kitchen. The linen cupboard 48 and the garage 49 are not connected into the ventilation system.

As the ventilation system ducts in the loft carry warm air they must be insulated to minimise heat loss. They were boxed in with 35 mm. aluminium faced thermal insulation plastic foam board with 250 mm of fibre glass insulation outside this box.

The air is drawn from the apex of the roof space which it enters via a series of vents under the eaves. One such entry vent is provided at each corner of the roof. The fine filtering air filter 18 ensures there is no objection to drawing the fresh air via the loft.

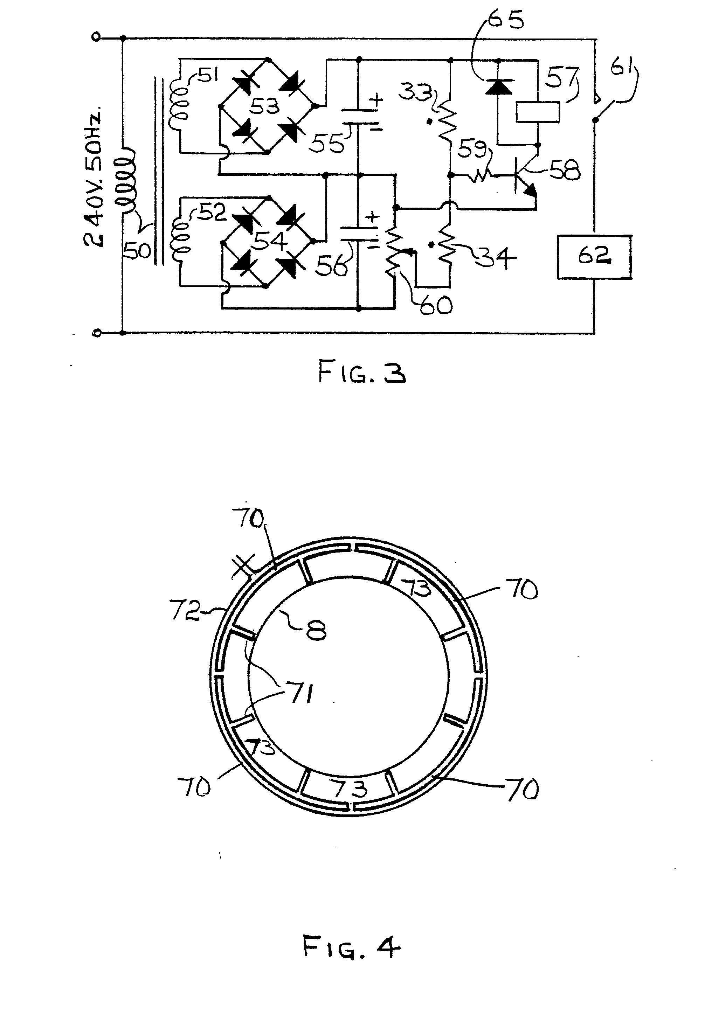

The Gas Authority may for safety reasons require that the cooling air supply is cut off when certain flue temperatures are not present.    Figure 3 shows one circuit by which this may be achieved.

The transformer 50 has two 12 volt 0.25A secondary windings 51 and 52.    The bridge rectifiers 53 and 54 provide two series connected 12 volt D.C. supplies each smoothed with 1,000 uf capacitors 55 and 56.    A relay coil 57 is connected in series with a transistor 58 across the 12 volt D.C. supply shown uppermost in Figure 3

Two thermistor probes 33 and 34 are connected in series across the 24 volts D.C provided by the two 12 volt series connected supplies.    The two thermistors have their junction point connected to the transistor base via a 1,500 ohm current limiting resistor 59.    The end of the thermistor 34 is connected to the slider of a 1,000 ohm potentiometer 60.    The diode 65 across the relay coil 57 is to suppress voltage peaks which might otherwise damage the transistor.

It will be seen that the two thermistors connected in series form one side of a bridge network the other side of which is formed by the two 12 volt series connected D.C. power supplies. Thermistor 33 senses the temperature at the top of the flue whilst thermistor 34 senses the temperature of the air entering the boiler.    If thermistor 33 is hotter than 34 the voltage applied to the transistor 58 base will become positive and the increased transistor current flowing through the relay coil 57 will cause the relay contacts 61 to close and the fan 62 to impel air through the heat exchanger to ventilate the house. If however the temperature of thermistor 33 is lower than that of 34 then its resistance and therefore the voltage across it will be the higher and the transistor 58 will be caused to cut off the current to the relay coil 57 and the relay contacts 61 will open thus stopping the fan 62. The potentiometer 60 enables the operating point of the relay relative to the operating temperatures of the two thermistors to be adjusted as required.

As the volume of hot gasses in the flue is considerably greater than the relatively small volume of the cold gasses at its top it is in practice possible to operate with the temperature at the top of the flue equal to that of the air entering the boiler. The range covered by the potentiometer is sufficient to permit this.

If it is not desired to extract the maximum possible heat from the flue the lower thermistor, which senses the temperature of the air entering the boiler, can be omitted. If this is done the circuit in figure 3 remains unchanged except that the thermistor 34 would be replaced with a fixed resistor.

The inventor discovered that with the heat exchanger shown in figure 1 in which the fresh air is warmed in the duct formed by the wall of the flue pipe 8 and an outer tube 23 that the transfer of heat from the flue gasses to the fresh air is around 40% He also discovered that by making the horizontal cross section of the heat exchanger as is shown in Figure 4 that the transfer efficiency is increased to around 60%

This improvement was obtained by clamping a number of aluminium extrusions 70 against the outer surface of the flue pipe 8 with a number of bands 72 at intervals up the length of the heat exchanger so that there is good thermal contact between the fins 71 and the outside of the flue pipe. The outer joints between each of the extrusions 70 which collectively form the outside wall of the air heating duct should be sealed with high temperature tape or other suitable sealant.

As the fresh air passes down the heating ducts 73 heat is imparted to it from every wall of the ducts instead of only from the wall 8 of the flue pipe as is the case with the simple arrangement in Figure 1. Clearly the aluminium extrusion 70 and 71 has to be thick enough to freely conduct the heat from the flue pipe which can conveniently be 1.5 mm stainless steel. A thickness of 3 mm is suitable for the aluminium extrusion. Clearly also the inner ends of the fins 71 should be shaped to the outer profile of the flue pipe 8 so that there is good thermal contact between the two.

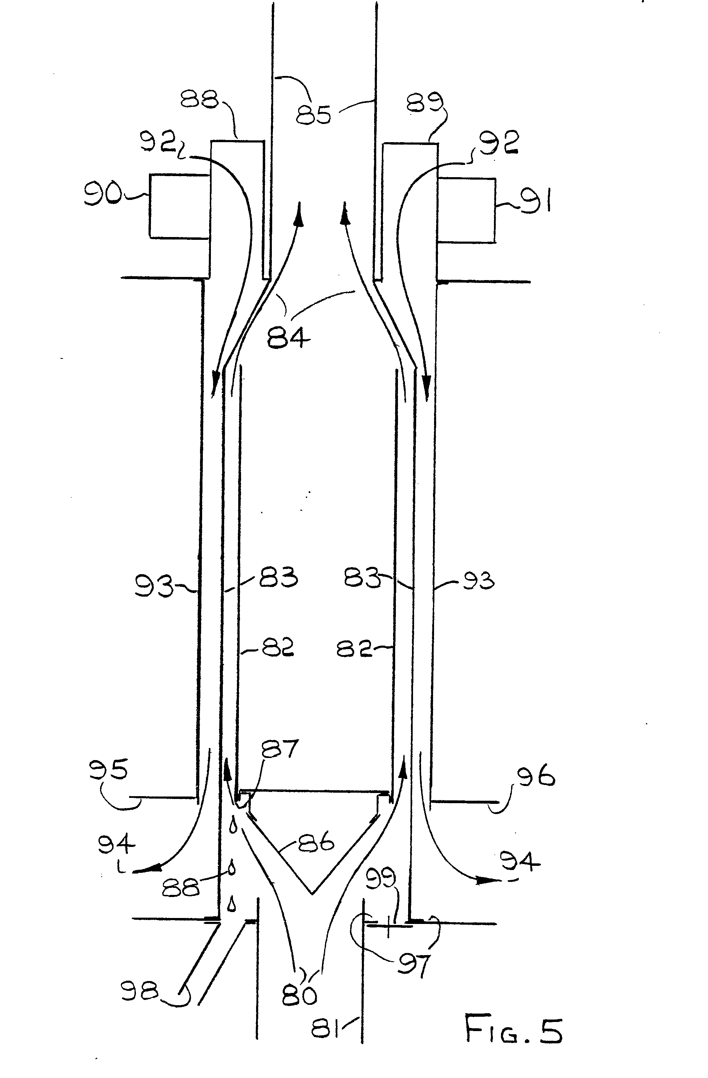

Where the Gas Authority regulations require that there should be a completely unrestricted flue of at least the normally recommended diameter through the heat exchanger then the arrangement just described is the most efficient possible. However where the Gas Authority will permit a central core to be added inside the flue the surface area in contact with the hot flue gasses can be greatly increased so that the transfer efficiency can be raised to around 75%   Figure 5 shows a vertical cross section through a heat exchanger of this type.

The hot products of combustion 80 from the boiler enter the heat exchanger via the lower circular pipe 81 which is connected to the flue pipe which is not shown but which runs upward from the combustion unit.

The hot products of combustion 80 flow upwards between the circular inner core 82 and the heat exchanger flue wall 83. The cooled products of combustion 84 leave the heat exchanger via the upper circular flue connection pipe 85 and leave the building via the flue terminal which is not shown.

The conical bottom 86 closes the lower end of the central core 82 so that the combustion products cannot pass up through its open centre.   The bottom rim of the central core 82 is extended downwards 87 so that condensate on the cool surface of the central core drips 88 down clear of the conical bottom 86. The top of the central core 82 is open so that any rubble falling from above is collected without risk of blocking the flue.

The two centrifugal blowers 88 and 89 driven by electric motors 90 and 91 draw in fresh air 92 and propel it down the duct formed by the flue wall 83 and the outer wall 93.   The warmed fresh air 94 leaves the heat exchanger via the two sheet metal connectors 95 and 96 to which the ventilation ducts which distribute it throughout the building are joined during installation

The bottom of the heat exchanger flue pipe 83 is closed with a plate 97 which is continuously welded both to the bottom of the flue pipe 83 and to the lower circular flue connection tube 81 so as to form an annular watertight collector for the condensation which forms within the heat exchanger. This condensation forms as the products of combustion 80 are cooled as they pass up between the heat exchanger flue 83 and the central core 82. The condensation trickles down their walls into the annular watertight collector from which it is drained away by the condensate drain pipe 98. Plastic piping which is not shown carries the condensate from the drain pipe 98 to a drain. A number of watertight cover plates 99 can be removed so that the heat exchanger ducts up which the hot gasses 80 pass can be cleaned with a flue brush.

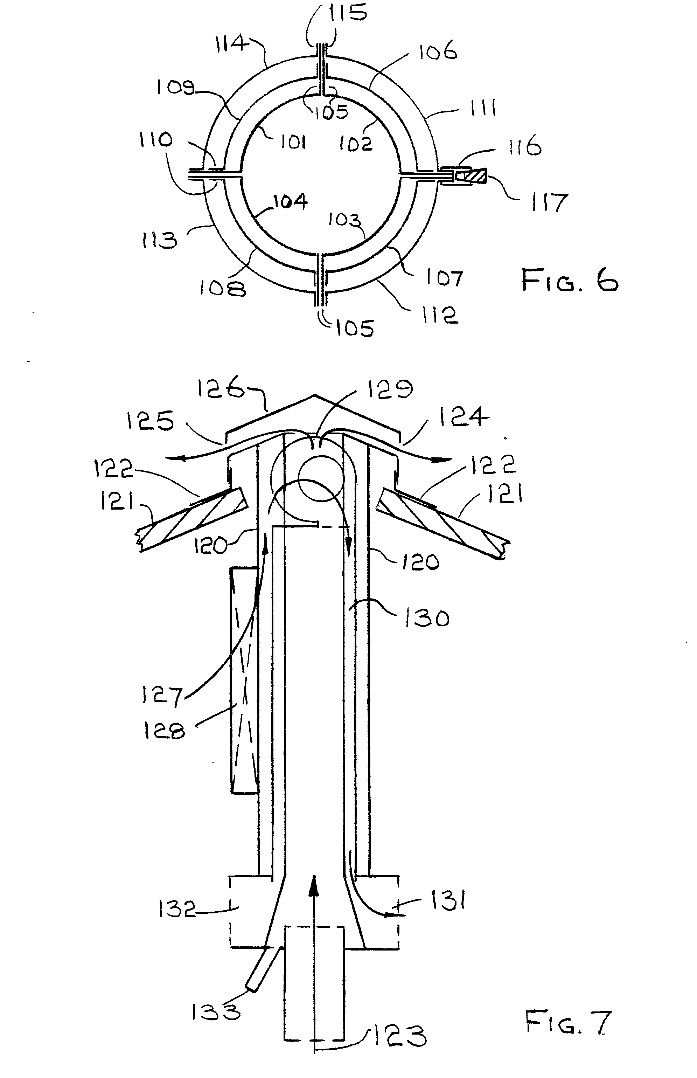

Figure 6 shows a horizontal cross sectional view through the centre section of the heat exchanger in Figure 5. The central core 82 in figure 5 is formed from a number of stainless steel sheet pressings shown in figure 6 as 101, 102, 103 and 104 the edges of which are formed into flanges 105 which extend radially outward from the centre of the heat exchanger.

The heat exchanger flue pipe 83 in figure 5 is similarly formed from a number of stainless steel pressings 106, 107, 108 and 109 the edges of which are also formed into flanges 110 which extend radially outwards.

The outer air duct wall 93 in figure 5 is similarly formed of a number of sheet metal pressings 111, 112, 113 and 114 the edges of which are also formed into flanges 115 extending radially outwards.

The flanges 105 of the pressings 101, 102, 103 and 104 which together form the centre core 82 conduct heat outward from the centre core 82 through the flue wall 83 formed by the pressings 106, 107, 108 and 109 to the duct outer wall 11 formed by pressings 111, 112, 113 and 114. In order that the heat may be conducted from the centre core 82 and the flue wall 83 to the duct outer wall 93 the flanges 105 and 110 are welded together. Welding may be by a series of spot welds. If spot welding is used the greater the number of spot welds the greater the heat conducted. Similarly the thicker the gauge of the sheet metal used the greater the heat conduction. If the number of pressings used to fabricate the core, flue and outer duct is increased the heat conduction will also be increased.

If the core (101, 102, 103 and 104) diameter is about 150 mm it can be made from 1.6 mm thick stainless steel sheet and the flue wall (106, 107, 108 and 109) from 0.8 mm stainless steel sheet whilst the outer heating duct wall (111, 112, 113 and 114) can be made from 1.6 mm aluminium. The use of aluminium for the outer wall reduces cost and improves thermal conductivity. As aluminium cannot cheaply be welded to stainless steel good thermal conduction between fins 105 and the outer aluminium pressings 111, 112, 113 and 114 can be achieved by continuously clamping the two together. This may be done by fitting one end of a hard aluminium

'H' section extrusion 116 over the full length of the fins 105 and 115.    After fitting the extrusion 116 over the fins 105 and 115 a continuous extruded aluminium wedge 117 is forced into the outer end of the 'H' section extrusion 116.    This forces the inner ends to close up and continuously clamp the aluminium fins 115 into intimate contact with the stainless steel fins 105.

It will be understood that the body of the heat exchanger the cross section of which is shown in figure 6 could be made in a number of ways.    For example it could be made from one or more aluminium extrusions providing they are protected by anodising, painting or other surface treatment from the corrosive action of the condensate from the products of combustion.

On domestic installations the Gas Authority may object on safety grounds to a heat exchanger unit being installed in the flue. On such installations an unskilled installer might for example position it immediately above the boiler so that the volume of cooled gasses in the flue above the heat exchanger is so great that it inhibits the free upward flow of the products of combustion unless a fan to blow the flue gas upward is also installed.    The objection to this is that it is not a fail safe arrangement.

All such risks can be eliminated by combining the heat exchanger with the flue terminal as a single integrated unit.    In this way unsafe installation becomes almost impossible.    The variations from one individual installation to another would have no more effect on the flow of flue gasses or the performance of the boiler than the normal variations between one type of flue terminal and another. In addition the volume of cold gasses above the heat exchanger would be negligible.

Figure 7 illustrates a ridge vent terminal and heat exchanger integrated together as a single unit. On installation the unit rests on the apexes of (and bridge between) two adjacent roof trusses which are not shown. The outer case 120 of the unit is relatively wide in the direction parallel to the roof ridge line and very narrow at right angles to the line of the roof ridge.

The top section of the unit can therefore form a normal ridge vent terminal. Hot gasses 123 enter the bottom of the integrated terminal unit and pass without restriction through the heat exchanger zone to leave the ridge vent terminal via the openings 124 and 125. The top cap 126 forms an integral part of the terminal. If desired on appearance grounds ridge vent tiles may be mounted along the outside of the top cap on installation.

Fresh air 127 is drawn from the roof space through the air filter 128 into the units outer case 120 by the fan 129 which propels it down the heat exchanger heating duct 130 from which it passes into the ventilation ducting at 131 and 132. The condensate leaves via drain pipe 133

The performance figures below permit the return on the investment cost of a system as claimed to be calculated. They relate to the well insulated and well sealed house described earlier and assume a 75% efficient heat exchanger. They are the average over the 7 month U.K. heating season

| | | |
|---|---|---|
| Output from boiler | 4.9 kW | |
| Less for water heating | 2.0 kW | |
| Boiler output for space heating | 2.9 kW | 2.9 kW |

| | | |
|---|---|---|
| Recovered by heat exchanger | 1.1 kW | |
| Recovered heat from roof space | 0.4 kW | |
| Total heat recovery | 1.5 kW | 1.5 kW |

Saving of heat lost in well insulated house
due to random ventilation (2/3 of 40%)       1.6 kW

          6.0 kW

The directly comparable figures for an identical house with conventional random ventilation and a normal gas boiler/radiator heating system are as follows:-

Total space heating requirement made up of:-

| | | |
|---|---|---|
| 60% for space heating | 3.6 kW | |
| 40% random ventilation loss | 2.4 kW | 6.0 kW |
| Plus for water heating | | 2.0 kW |
| Output from boiler | | 8.0 kW |

It will be seen that the heat drawn directly from the boiler for space heating with the system as claimed is 2.9 kW as compared to 6.0 kW using conventional random ventilation and a normal boiler/radiator system.

If the annual fuel cost for space and water heating for the installation as claimed is £150 p.a. then that for the comparable conventional system would be

$$£150 \times \frac{8.0 \text{ kW}}{4.9 \text{ kW}} = £245$$

The installation as described cost £650 when installed in a new house during building. However as the heat requirement from the boiler/radiator system was halved this saved £250.

The extra cost of the system as claimed was therefore only £400. This cost is recovered over some 4 years from the £95.p.a fuel saving cost. However as the real cost of energy can be expected to rise at 30% p.a. the cost recovery time is in practice reduced to 3 years.

Claims

1. Equipment for warming the incoming fresh air ventilating a building in which the said fresh air is drawn from outside the building and heated by being propelled through a duct which has no opening into but is heated by thermal conduction from the hot chimney flue of the building's heating combustion unit which equipment is characterised in that the volume of ventilating air heated in a 15 minute period does not exceed the volume of the building being heated and that the ventilating air is drawn from the space under the building's roof which space is in turn replenished with fresh air from outside the building.

2. Equipment as claimed in claim 1 and further characterised in that it is offered for sale, sold or purchased either as a kit of parts, partial kit of parts or one major part of the equipment or as part of a building

3. Equipment as claimed in claims 1 and 2 and further characterised in that heat is withdrawn from the hot flue gasses by all surfaces with which they come into contact in the heat transfer zone and is transferred to the fresh/ventilating air from all surfaces of the heating duct zone with which the ventilating air comes in contact

4. Equipment as claimed in claims 1 to 3 and further characterised in that a significant part of the surface which imparts heat to the ventilating air is formed from a number of thermally conducting sections each of which conducts heat from the outside of the flue wall to the outer wall of the zone in which the ventilating air is heated

5 Equipment as claimed in claims 1 to 3 and further characterised in that a significant part of the surface which extracts heat from the hot flue gasses is formed by an inner core within the flue which/has a number of (core) thermally conducting fins extending outward to the flue wall and thence on to the outer wall of the duct in which the ventilating air is heated so that heat from the said central core is conducted by the fins to the outer wall of the air heating duct which is itself made of thermally conducting material

6 Equipment as claimed in claims 1 and 2 and further characterised in that the heated fresh air is ducted or it is recommended that it should be ducted to points within the building from which a significant proportion of the air flows through a substantial part of the building to ventilate it

7 Equipment as claimed in claims 1 and 2 and further characterised in that the heating combustion unit draws its air intake from within the building and passes its products of combustion up the said flue together with a significant quantity of air from within the building

0023757

8    Equipment as claimed in claims 1 and 2 and further
characterised in that at least that section of the flue
from which heat is transferred to warm the incoming
ventilating air is assembled to form a single unit with
the flue terminal

9    Equipment as claimed in claims 1 and 2 and further
characterised in that at least that section of the flue
from which heat is transferred to warm the incoming
ventilating air is assembled to form a single unit with the
heating combustion unit

10   Equipment as claimed in claims 1 and 2 and further
characterised in that at least that section of the flue
passing through the ventilation heat exchanger assembly
does not deviate from vertical and includes in the downward
extension of its vertical section a trap which collects the
condensate formed as the flue gasses are cooled and which
trap includes provision for piping the condensate to a drain.

11   Equipment characterised by any permutation or combination
of the claims made in claims 1 to 10

12   Equipment as claimed in claims 1 and 2 and substantially
as described herein with reference to the drawings herewith

FIG. 1

Fig. 2

FIG. 3

FIG. 4

0023757

Fig. 5

FIG. 6

FIG. 7

0023757

European Patent
Office

EUROPEAN SEARCH REPORT

Application number

EP 80 30 2035

## DOCUMENTS CONSIDERED TO BE RELEVANT

| Category | Citation of document with indication, where appropriate, of relevant passages | Relevant to claim |
|---|---|---|
| X | US - A - 4 142 679 (McKILLOP) <br> * Abstract; figures 1,2 * | 1,3,6, 8 |
| | US - A - 4 103 825 (ZORNIG) <br> * Abstract; figure 1 * | 1 |
| | DE - B - 1 139 963 (COMP. DE PONT A MOUSSON) <br> * Claim 1; figures 1,2 * | 4 |
| | CH - A - 575 584 (TREVISAN) <br> * Column 1, lines 26-41; figure 1 * | 5 |
| | US - A - 2 252 784 (POWERS) <br> * Figure 1 * | 9 |
| | NL - A - 76 02651 (AMGAS) <br> * Page - page 2, line 17; figures * | 1,3,4, 6,7,10 |

CLASSIFICATION OF THE APPLICATION (Int. Cl.3)

F 24 D   5/04
F 28 D  21/00
F 24 B   7/00

TECHNICAL FIELDS SEARCHED (Int. Cl.3)

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-11-1980 | VAN GESTEL |

EPO Form 1503.1  06.78